**Europäisches Patentamt**

**European Patent Office**

**Office européen des brevets**

(19)

(11) Veröffentlichungsnummer: **0 326 949**
**A2**

(12)

# EUROPÄISCHE PATENTANMELDUNG

(21) Anmeldenummer: 89101374.0

(22) Anmeldetag: 27.01.89

(51) Int. Cl.⁴: **F16H 11/06**

(30) Priorität: 04.02.88 DE 3803201

(43) Veröffentlichungstag der Anmeldung:
09.08.89 Patentblatt 89/32

(84) Benannte Vertragsstaaten:
DE FR GB

(71) Anmelder: FORD-WERKE
AKTIENGESELLSCHAFT
Werk Köln-Niehl Henry-Ford-Strasse
Postfach 60 40 02
D-5000 Köln 60(DE)

(84) DE

Anmelder: FORD MOTOR COMPANY LIMITED
Eagle Way
Brentwood Essex CM13 3BW(GB)

(84) GB

Anmelder: FORD FRANCE SOCIETE ANONYME
344 Avenue Napoléon Bonaparte B.P. 307
F-92506 Rueil Malmaison Cedex(FR)

(84) FR

(72) Erfinder: Fuss, Josef
Herderstrasse 9
D-5013 Elsdorf(DE)
Erfinder: Kohl, Ernst
Oberländer Ufer 150 B
D-5000 Köln 51(DE)

(74) Vertreter: Ritzkowsky, Harald, Dipl.-Ing.
Ford-Werke Aktiengesellschaft
Patentabteilung NH/DRP Henry-Ford-Strasse
D-5000 Köln 60(DE)

(54) **Steuerventilanordnung für ein stufenlos regelbares Umschlingungsgetriebe.**

(57) Bei einer Steuerventilanordnung für ein stufenlos regelbares Umschlingungsgetriebe, die ein erstes Regelventil für den Druck im Primärservo für die Übersetzung des Umschlingungsgetriebes und ein zweites Regelventil für den Druck im Sekundärservo für die Spannung des Umschlingungsbandes aufweist und diese beiden Regelventile in Abhängigkeit von der Drehzahl und dem Drehmoment des Antriebsmotors von der Drosselklappenwelle her beaufschlagt werden und eine Moduliereinrichtung den Druck im Sekundärservo in Abhängigkeit von der Übersetzung und dem vom Motordrehmoment variiert, besteht die Moduliereinrichtung aus einer Hebelanordnung (12 und 15), wobei auf den ersten Hebel (12) an einem Ende (13) eine Nockenscheibe (7) Drehmomentabhängig einwirkt und er mit seinem anderen Ende (14) auf das Ventilelement (9) des zweiten Regelventiles (8) einwirkt und der zweite Hebel (15) zwischen seinen Enden über einen Bolzen (16) drehbar gelagert ist und an dessen einem

Ende (18) ein Sensorgestänge (11) übersetzungsabhängig einwirkt und der mit seinem anderen Ende
(19) über einen Zapfen (20) drehbar mit dem ersten
Hebel (12) verbunden ist.

FIG. 4

## Steuerventilanordnung für ein stufenlos regelbares Umschlingungsgetriebe

Die Erfindung bezieht sich auf eine Steuerventilanordnung für ein stufenlos regelbares Umschlingungsgetriebe der im Oberbegriff des Patentanspruches 1 erläuterten Art.

Aus der DE-PS 27 03 487 ist eine Steuerventilanordnung für ein stufenlos regelbares Umschlingungsgetriebe der im Obergriff des im Patentanspruches 1 erläuterten Art bekannt.

Bei dieser Steuerventilanordnung sind im wesentlichen ein erstes Regelventil zum Bestimmen des Druckes im Primärservo zur Einstellung der Übersetzung des Umschlingungsgetriebes und ein zweites Regelventil zum Bestimmen des Druckes im Sekundärservo zur Einstellung der Spannung des Umschlingungsbandes vorgesehen, wobei das erste dieser beiden Regelventile in Abhängigkeit von der Drehzahl und dem Drehmoment des Antriebsmotors über eine von der Drosselklappenwelle betätigten Nockenscheibenanordnung beaufschlagt wird und das zweite von der Stellung des mit dem Primärservo verbundenen Sensorgestänges und somit in Abhängigkeit von der Übersetzung beaufschlagt wird.

Diese bekannte Steuerventilanordnung weist den Nachteil auf, daß die Steuerung des Druckes im Sekundärservo das zu übertragende Drehmoment nur soweit berücksichtigt, daß durch eine generelle Grundeinstellung ein Mindest-Sekundärdruck zum Übertragen des maximalen Drehmomentes vorhanden ist, der dementsprechend im Teillastbereich viel zu hoch ist. Das bedeutet, daß die Bauteile des Umschlingungsgetriebes, insbesondere das z.B. als Schubgliederband ausgebildete Umschlingungsband unnötig hohen Belastungen ausgesetzt ist und daß auch die Druckmittelpumpe unnötig hohe Drücke bereitstellen muß, wodurch der Wirkungsgrad des Getriebes verschlechtert und dadurch zwangsläufig der Kraftstoffverbrauch erhöht wird.

Aus der EP-OS 01 58 370 ist eine Steuerventilanordnung für ein stufenlos regelbares Umschlingungsgetriebe bekannt, die im Aufbau der eingangs erwähnten Steuerventilanordnung entspricht, bei der jedoch darüber hinaus noch ein Modulierventil vorgesehen ist, das den Druck im Sekundärservo in Abhängigkeit vom Motordrehmoment variiert, um die vorhergehend erwähnten Nachteile zu vermeiden.

Diese bekannte Steuerventilanordnung weist jedoch den Nachteil auf, daß das zusätzliche Modulierventil über eine Membrandose in Abhängigkeit vom Unterdruck im Ansaugrohr des Antriebsmotors beaufschlagt wird, wodurch neben dem zusätzlichen Modulierventil noch die Membrandose mit den entsprechenden Verbindungsleitungen erforderlich wird. Darüber hinaus ist bei den heute zur Abgasentgiftung erforderlichen Eingriffen an den Verbrennungsmotoren der Ansaugrohr-Unterdruck kein verläßliches Maß mehr für das vom Antriebsmotor gelieferte Drehmoment.

Die Aufgabe der Erfindung ist es eine Moduliereinrichtung für den Druck im Sekundärservo mittels einer wesentlich einfacheren mechanischen Hebelanordnung bereitzustellen, die keine kostenaufwendigen Änderungen eines bereits vorhandenen Gehäuses einer Steuerventilanordnung erfordert.

Gemäß der Erfindung wird diese Aufgabe gelöst, indem eine Steuerventilanordnung nach dem Oberbegriff des Patentan spruches 1 die im Kennzeichenteil des Patentanspruches 1 aufgezeigten Merkmale aufweist.

Dadurch, daß die Moduliereinrichtung für den Druck im Sekundärservo in Form einer Hebelanordnung ausgebildet ist, die aus einem ersten, von einer auf der mit der Drosselklappenwelle verbundenen Nockenwelle angeordneten Nockenscheibe drehmomentabhängig betätigten Hebel und einem zweiten, von dem auf das zweite Regelventil für den Druck im Sekundärservo einwirkende Sensorgestänge übersetzungsabhängig betätigten Hebel besteht und der zweite Hebel am Steuergehäuse um einen feststehenden Bolzen schwenkbar gelagert ist und mit seinen freien Enden drehbar mit dem ersten Hebel verbunden ist, der mit seinem freien Ende auf das zweite Regelventil für den Druck im Sekundärservo einwirkt, wird eine Überlagerung der von der Übersetzung abhängigen Bewegung des zweiten Hebels durch die von der Stellung der Drosselklappe und damit der Drehmomentlieferung des Antriebsmotors abhängigen Bewegung des ersten Hebels erzielt, die auf das zweite Regelventil für den Druck im Sekundärservo einwirkt

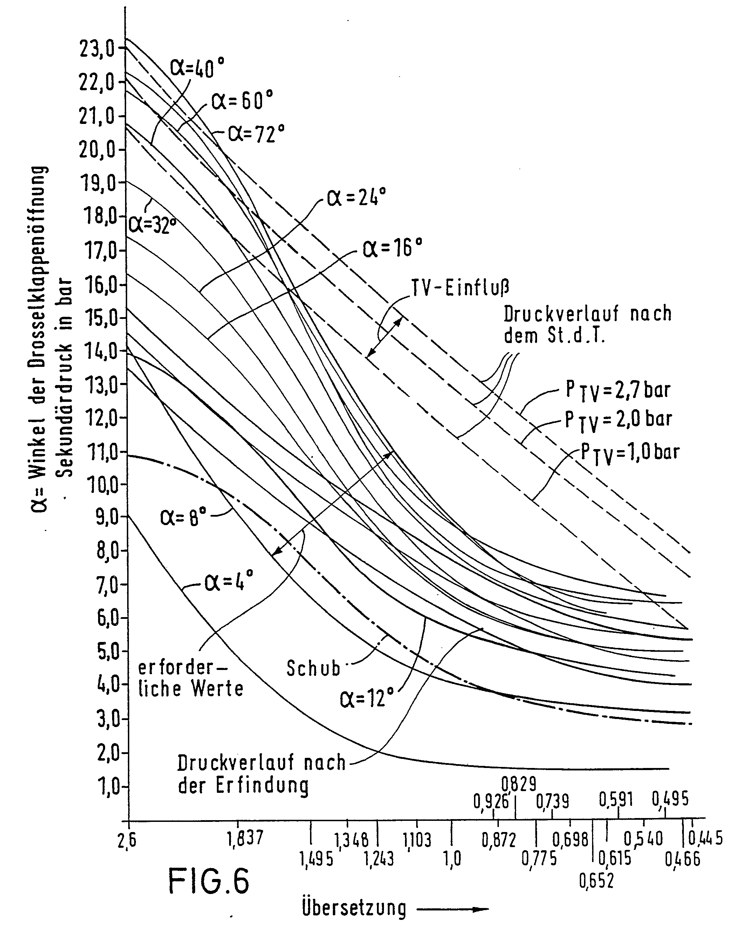

Diese Überlagerungsbewegung kann durch eine entsprechende Auswahl der Hebelverhältnisse und der auf den ersten Hebel einwirkenden Nokkenscheibe so ausgelegt werden, so daß ein optimaler Sollwertverlauf für den Sekundärdruck im Teillastbereich des Umschlingungsgetriebes erzielt werden kann, dessen Mindestwerte bis auf die Schubkurve (Fig. 6) abgesenkt werden können.

Die Übertragung der Bewegung von der Nokkenscheibe auf den ersten Hebel kann hierbei vorzugsweise über eine die Reibung vermindernde Rollenanordnung erfolgen.

Die Erfindung wird anhand eines in der beiliegenden Zeichnung gezeigten Ausführungsbeispieles näher erläutert. Es zeigt:

Fig. 1 Eine Draufsicht auf eine Steuerventilanordnung gemäß dem Stand der Technik;

Fig. 2 eine Draufsicht auf eine Steuerventilanordnung für ein stufenlos regelbares Umschlingungsgetriebe einer gegebenen Bauform an die erfindungsgemäße Moduliereinrichtung für den Druck im Sekundärservo angewendet wird;

Fig. 3 zeigt eine Seitenansicht des Steuerventilgehäuses der Steuerventilanordnung nach Fig. 2 in Richtung des Pfeiles II gesehen;

Fig. 4 eine Schrägrißdarstellung der erfindungsgemäßen Hebelanordnung.

Fig. 5a und 5b eine geometrische und prinzipielle Darstellung beider Hebelanordnungen und

Fig. 6 ein Diagramm der Sekundärdrücke über dem Übersetzungsverhältnis mit der Drosselklappenstellung als Parameter.

Eine Steuerventilanordnung für ein stufenlos regelbares Umschlingungsgetriebe der im Oberbegriff des Patentanspruches 1 erläuterten Art besteht im wesentlichen aus einem Steuerventilgehäuse 1 in dem eine Vielzahl von Regel-, Schalt- und Modulierventilen angeordnet sind, von denen im vorliegenden Fall nur die für die Erfindung wesentlichen drei Regelventile mit Bezugszeichen bezeichnet sind und kurz erläutert werden.

Die im Steuerventilgehäuse 1 ganz links angeordnete Ventilanordnung 2 stellt ein als Drosseldruckventil oder auch als Nebendruckregelventil bezeichnetes Regelventil dar, bei dem ein Ventilelement durch eine über eine Hebelanordnung 3 mit der nicht gezeigten Drosselklappenwelle des Verbrennungsmotors verbundene Nockenwelle 4 und einer darauf angeordneten Nockenscheibe 5 in Abhängigkeit vom Drehmoment des Antriebsmotors betätigt wird.

Die benachbarte Ventilanordnung 6 wird als Primärventil oder erstes Regelventil bezeichnet und bestimmt den Druck im Primärservo des Umschlingungsgetriebes, das für die Einstellung der Übersetzung des Umschlingungsgetriebes zuständig ist. Ein Ventilelement des ersten Regelventiles 6 wird wieder von einer auf der Nockenwelle 4 angeordneten Nockenscheibe 7 in Abhängigkeit vom Drehmoment des Antriebsmotors betätigt.

Die parallel hierzu benachbarte Ventilanordnung 8 wird als Sekundärventil oder zweites Regelventil bezeichnet und bestimmt den Druck im Sekundärservo, der für die Aufrechterhaltung der erforderlichen Spannung des Umschlingungsbandes zur Übertragung des vorhandenen Drehmomentes verantwortlich ist.

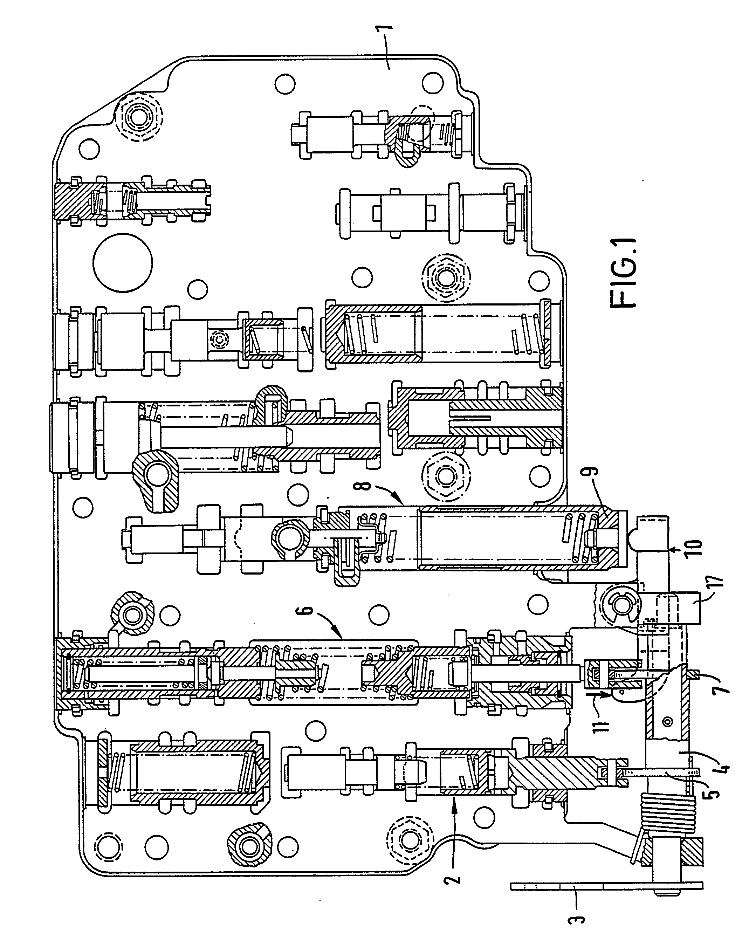

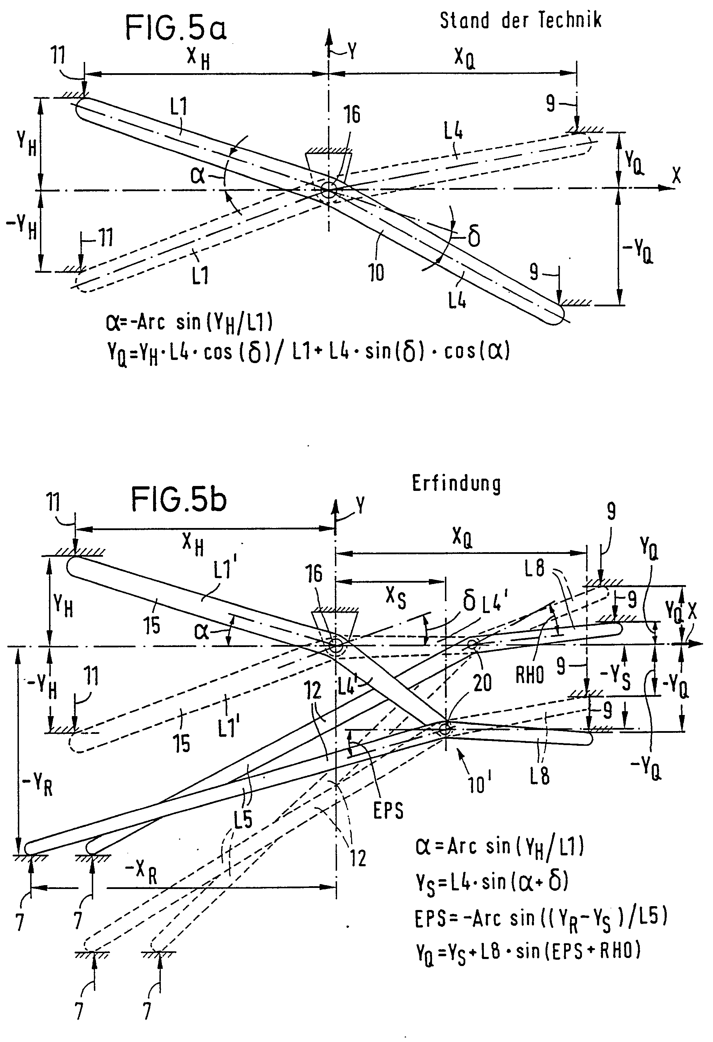

Das wesentliche Ventilelement 9 des zweiten Regelventiles 8 wird bisher normalerweise über eine einfache Hebelanordnung 10 von einem Sensorgestänge 11 her betätigt (siehe Fig. 1 und Fig. 5a), das unmittelbar mechanisch mit einer der beweglichen Kegelscheiben verbunden ist und dementsprechend die jeweilig eingestellte Übersetzung des Umschlingungsgetriebes angibt (siehe auch Fig. 6 Druckverlauf nach dem Stand der Technik).

Bei der bisher üblichen einfachen Hebelanordnung wurde daher der Druck im Sekundärservo im wesentlichen nur etwa linear mit dem Übersetzungsverlauf geregelt, wodurch im Teillastbereich ein zu hoher Druck im Sekundärservo vorlag, der zu einer erhöhten Beanspruchung des Umschlingungsbandes und zu einer Verschlechterung des Getriebewirkungsgrades führte.

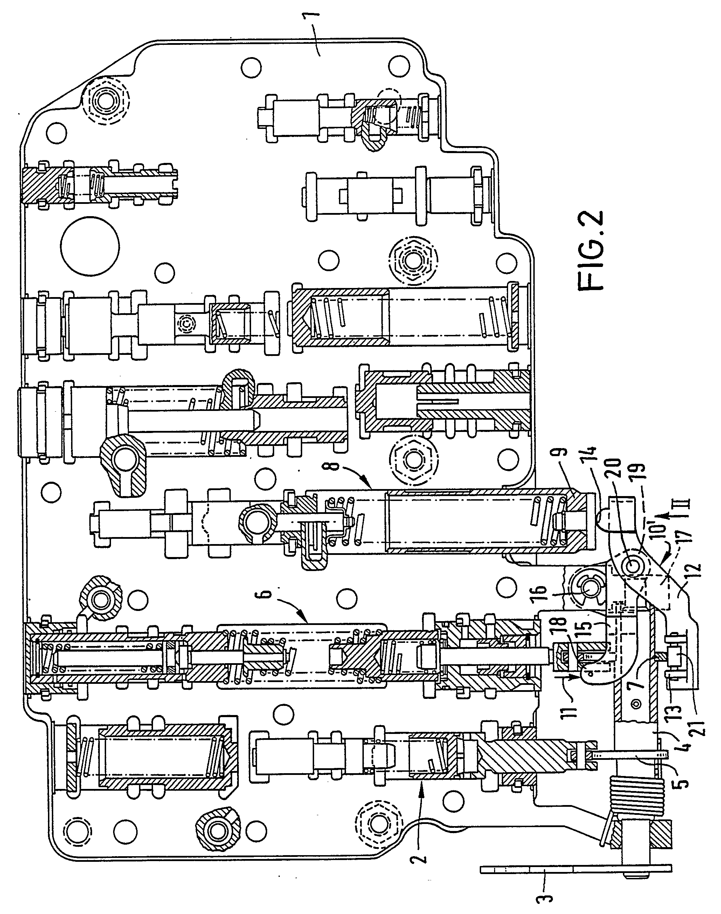

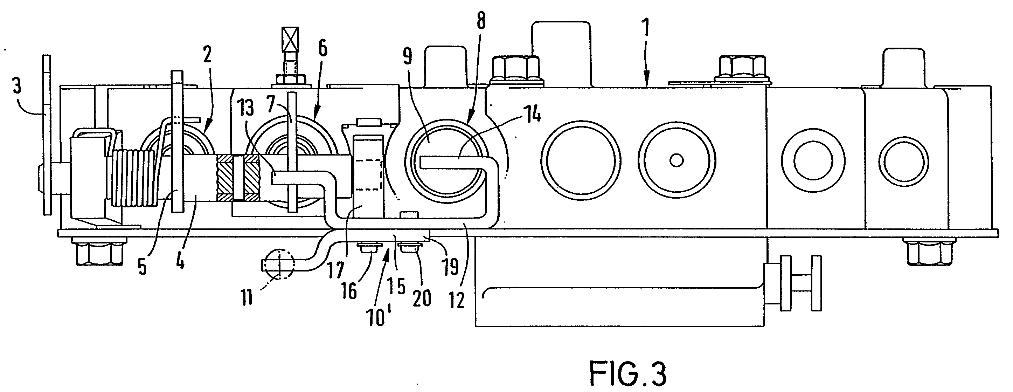

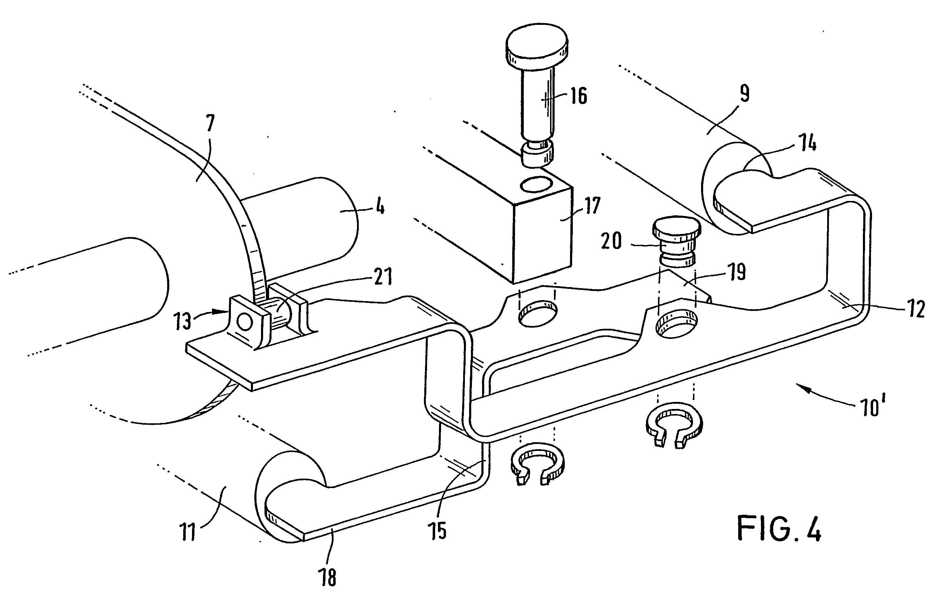

Gemäß der Erfindung besteht die Hebelanordnung 10' aus einem ersten Hebel 12, der an seinem einem Ende 13 über die auf der Nockenwelle 4 angeordnete modifizierte Nockenscheibe 7 (die bisher nicht benutzte Rückseite der Nockenscheibe ist als Steuerkante ausgebildet) drehmomentabhängig betätigt wird und der mit seinem anderen Ende 14 auf das Ventilelement 9 des zweiten Regelventiles 8 einwirkt. Auf den ersten Hebel 12 wirkt ein zweiter Hebel 15 ein, der um einen feststehenden Bolzen 16 an einem Teil 17 des Steuerventilgehäuses 1 drehbar gelagert ist und an dessen einem Ende 18 das von der Übersetzung abhängige Sensorgestänge 11 angreift und dessen anderes Ende 19 über einen Zapfen 20 drehbar mit dem ersten Hebel 12 verbunden ist (siehe Fig. 2, 3, 4 und 5b).

Vorzugsweise sind die beiden Hebel 12 und 15 als einfache Blechpreßteile ausgebildet, deren entsprechende Enden in den Bereichen, wo sie mit den Anschlußelementen zusammenwirken, abgerundet sind oder aber sogar mit einer die Reibung vermindernden Walzenanordnung 21 versehen sind. Durch die erfindungsgemäße Hebelanordnung ergibt sich eine Überlagerung zwischen der von der Übersetzung her einwirkenden Bewegung und einer von dem vom Antriebsmotor tatsächlich abgegebenen Drehmoment her abgeleiteten Bewegung, so daß ein Druck im Sekundärservo bereitgestellt wird, der nur so hoch ist, wie er zur Übertragung des jeweiligen Drehmomentes erforderlich ist (siehe Fig. 6). In Figur 5 a ist die bisher übliche Hebelanordnung 10 gezeigt, bei der das Sensorgestänge 11 an einem Hebelarm L1 eines doppelarmigen Hebels angreift, der mit seinem anderen Hebelarm L4 auf das Betätigungsglied 9 des zweiten Regelventiles 8 einwirkt.

Die wirksamen Hebellängen des ersten Hebelarmes L1 sind mit $X_H$ und des zweiten Hebelarmes L4 mit $X_Q$ bezeichnet. Die von der unmittelbaren Übersetzungsregelung des Umschlingungsgetriebes über das Sensorgestänge eingeleiteten Bewegungen sind mit $Y_H$ und $-Y_H$ bezeichnet. Gegenüber einem Koordinatensystem mit der Abszisse x und der Ordinate y nimmt der Hebelarm L1 einen Winkel zur Abszisse ein und der Hebelarm L4 nimmt gegenüber der Achse des Hebelarmes L1 einen Winkel von ein. Die sich hierbei ergebenden Betätigungswege am Betätigungsglied 9 des zweiten Regelventiles 8 sind mit $Y_Q$ und $-Y_Q$ angegeben und sind nach den in der Figur 5 a angegebenen Formeln abzuleiten.

Figur 5 b zeigt die Hebelanordnung 10' gemäß der Erfindung bei der wieder das Sensorgestänge 11 auf einen doppelarmigen Hebel 15 mit einem Hebelarm L1' einwirkt und dessen anderer Hebelarm L4' wieder um einen Winkel gegenüber dem ersten Hebelarm angewinkelt ist.

Das freie Ende des zweiten Hebelarmes L4' trägt nunmehr den Drehpunkt 20 für einen weiteren doppelarmigen Hebel 12, dessen Hebelarme mit L5 und L8 bezeichnet sind. An dem einen Ende des Hebelarmes L5 greift eine Nockenscheibe 7 an, deren Bewegung in Abhängigkeit vom Drehmoment des Antriebsmotors steht. Das andere Ende des doppelarmigen Hebels 12 wirkt mit seinem Hebelarm L8 wieder auf das Betätigungsglied 9 des zweiten Regelventiles 8 ein. Der doppelarmige Hebel 15 und der doppelarmige Hebel 12 sind jeweils in vollen Linien in ihrer einen Endstellung gezeigt, während ihre entgegengesetzten Endstellungen jeweils in gestrichelten Linien angedeutet sind

Aus den angegebenen Betätigungswegen am freien Ende des Hebelarmes L8 ist ersichtlich, daß eine Beeinflussung des Betätigungsgliedes 9 des zweiten Regelventiles sowohl in Abhängigkeit von der jeweils eingestellten Übersetzung des Umschlingungsgetriebes als auch in Abhängigkeit von dem jeweilig anstehenden Drehmoment des Antriebsmotors erfolgt.

Die entsprechenden Betätigungswege lassen sich mit den unterhalb der Zeichnung angegebenen Formeln ableiten.

Da mit Änderung der Drehlage der Hebel 12 und 15 auch unterschiedliche Stellen ihrer Berührungsflächen 14 bzw. 18 mit den entsprechenden Flächen des Kolbens 9 und des Sensors 11 zusammenwirken, können durch die Form der hier noch als Kreise dargestellten Hebelenden zusätzliche Steuerungsparameter verwirklicht werden.

In Figur 6 ist ein Diagramm des Druckverlaufes des Sekundärdruckes über der Übersetzung aufgezeigt, wobei der Druckverlauf nach dem Stand der Technik in gestrichelten Linien dargestellt ist, während der Druckverlauf des Sekundärdruckes in der gemäß der Erfindung vorgesehenen Modulierung in vollen Linien gezeigt ist, wobei die unterschiedlichen Linien unterschiedlichen Drosselklappen-Öffnungswinkeln Drehmoment des Antriebsmotors entsprechen. Eine im Schubbetrieb auftretende Linie für den Sekundärdruck ist in Strich-Punkt-Linien gezeigt. Sie wird aus Sicherheitsgründen nicht unterschritten.

Dadurch wird das Schubgliederband in dem den allergrößten Teil des Betriebsbereiches darstellenden Teillastbereich nicht mehr unnötig hoch belastet und auch die Druckmittelpumpe braucht nicht mehr ständig das bisher hohe Druckniveau zu liefern, so daß sich der Gesamtwirkungsgrad des Umschlingungsgetriebes verbessert und dadurch der Kraftstoffverbrauch reduziert wird.

Darüber hinaus wird noch ein weiterer wesentlicher Vorteil erzielt, der darin besteht, daß die sonst beim Betrieb von Schubgliederbänder im Teillastbereich in der größten Übersetzung mit hohen Anpreßdrücken auftretenden, sogenannten "scratching noises", vermieden werden, die vom Fahrer als fremdartig und sehr störend empfunden werden. Es hat sich ergeben, daß bereits bei einer geringen Absenkung des Druckes im Sekundärservo um etwa 2 bar gegenüber dem heute üblichen Druckniveau ein Wegfall dieser Geräusche erreichbar ist.

## Ansprüche

1. Steuerventilanordnung für ein stufenlos regelbares Umschlingungsgetriebe, daß eine von einem Antriebsmotor angetriebene Primärwelle mit einer festen Kegelscheibe und einer auf deren Ansatz axial verschiebbaren Kegelscheibe aufweist, die über ein hydraulisches Servo bewegbar ist und deren über das endlose flexible Umschlingungsband angetriebene Sekundärwelle gleichfalls eine feste und eine auf deren Ansatz axial verschiebbare Kegelscheibe aufweist, die von einem hydraulischen Servo bewegbar ist und ein erstes Regelventil zum Bestimmen des Druckes im Primärservo zur Einstellung der Übersetzung des Umschlingungsgetriebes und ein zweites Regelventil zum Bestimmen des Druckes im Sekundärservo zur Einstellung der Spannung des Umschlingungsbandes vorgesehen ist und diese beiden Regelventile in Abhängigkeit von der Drehzahl und dem Drehmoment des Antriebsmotors über eine von der Drosselklappenwelle her betätigten Nockenscheibenanordnung bzw. einem Sensorgestänge beaufschlagt sind und wobei eine Moduliereinrichtung vorgesehen ist, die den Druck im Sekundärservo in Abhängigkeit vom Motordrehmoment und der Übersetzung variiert, **dadurch gekennzeichnet,** daß die Moduliereinrichtung für den Druck im Sekundärservo aus einer Hebelanordnung (10') besteht, die aus einem ersten, von einem auf der mit der Drosselklappenwelle verbundenen Nockenwelle (4) angeordneten Nockenscheibe (7) drehmomentabhängig betätigten Hebel (12) und einem zweiten, von dem auf das zweite Regelventil (8) für den Druck im Sekundärservo einwirkenden Servogestänge (11) übersetzungsabhängig betätigten Hebel (15) besteht und der zweite Hebel (15) um einen feststehenden Bolzen (16) schwenkbar gelagert ist und mit seinem freien Ende (19) über einen Zapfen (20) drehbar mit dem ersten Hebel (12) verbunden ist, der mit seinem freien Ende (14) auf das Ventilelement (9) des zweiten Regelventiles (8) für den Druck im Sekundärservo einwirkt.

2. Steuerventilanordnung nach Anspruch 1, **dadurch gekennzeichnet**, daß der erste und zweite Hebel (12 und 15) als einfache Blechpreßteile ausgebildet sind, an ihren mit den Verbindungselementen zusammenwirkenden Enden abgerundet, oder mit einer Walzenanordnung (21) versehen sind.

FIG.1

EP 0 326 949 A2

FIG.2

EP 0 326 949 A2

FORD/D-756 E

FIG.3

EP 0 326 949 A2

FORD / D-756 E

FIG. 4

EP 0 326 949 A2

## FIG.5a

Stand der Technik

$$\alpha = -\text{Arc sin}(Y_H/L1)$$
$$Y_Q = Y_H \cdot L4 \cdot \cos(\delta) / L1 + L4 \cdot \sin(\delta) \cdot \cos(\alpha)$$

## FIG.5b

Erfindung

$$\alpha = \text{Arc sin}(Y_H/L1)$$
$$Y_S = L4 \cdot \sin(\alpha + \delta)$$
$$EPS = -\text{Arc sin}((Y_R - Y_S)/L5)$$
$$Y_Q = Y_S + L8 \cdot \sin(EPS + RHO)$$

FIG.6

α = Winkel der Drosselklappenöffnung
Sekundärdruck in bar

α=40°
α=60°
α=72°
α=24°
α=16°
α=32°
TV-Einfluß
Druckverlauf nach dem St.d.T.
$P_{TV}$=2,7 bar
$P_{TV}$=2,0 bar
$P_{TV}$=1,0 bar
α=8°
α=4°
erforder- liche Werte
Schub
α=12°
Druckverlauf nach der Erfindung

Übersetzung